# EUROPÄISCHE PATENTANMELDUNG

(11) **EP 2 674 634 A2**
(43) Veröffentlichungstag der Anmeldung: **18.12.2013**
(21) Anmeldenummer: 13002645.3
(22) Anmeldetag: 21.05.2013
(51) Int. Cl.: F16C 29/02, E05F 15/12, E05F 3/22, F16C 29/12

(54) **Gleitstück**

(30) Priorität: 15.06.2012 DE 102012105239
(71) Anmelder: DORMA GmbH + Co. KG, 58256 Ennepetal (DE)
(72) Erfinder: Wildförster, Thomas, 58332 Schwelm (DE); Schweitzer, Falko, 58332 Schwelm (DE)

(57) **Zusammenfassung**

Die vorliegende Erfindung betrifft ein Gleitstück, insbesondere für Türschließer oder Drehflügelantriebe, mit einem Grundkörper und mit Gleitelementen zur Anlage an gegenüberliegenden Gleitschienenflächen einer Gleitschiene. Um ein derartiges Gleitstück zu schaffen, das die Verminderung bzw. die Vermeidung des Auftretens von Klackgeräusche und darüber hinaus ein Toleranzausgleich ermöglicht, ist erfindungsgemäß vorgesehen, dass mindestens eines der Gleitelemente (5) am Grundkörper (3) in Richtung auf die Gleitschienenflächen (2a) federnd vorgespannt angeordnet ist.

## Beschreibung

Die vorliegende Erfindung betrifft ein Gleitstück, insbesondere für Türschließer oder Drehflügelantriebe, mit einem Grundkörper und mit Gleit.-elementen zur Anlage an gegenüberliegenden Gleitschienenflächen einer Gleitschiene.

Derartige Gleitstücke, die insbesondere bei Türschließern oder Drehflügelantrieben Verwendung finden können, laufen in einer Gleitschiene und lagern einen Bolzen, der beispielsweise die Verbindung zu einem Hebel des Türschließers bildet. Wenn beim Übergang von der Beschleunigungs, in die Bremsphase das Gleitstück aufgrund eines Spieles zwischen der Gleitschiene und dem Gleitstück schlägt, entsteht ein Klackgeräusch in der Gleitschiene. Dieses Geräusch wird teilweise als störend empfunden, insbesondere wenn das Gleitstück Teil eines Drehflügelantriebes ist, bei dem relativ hohe Kräfte auftreten.

Es ist daher Aufgabe der vorliegenden Erfindung, ein Gleitstück der im Oberbegriff des Anspruchs 1 angegebenen Art zu schaffen, das die Verminderung bzw. die Vermeidung des Auftretens derartiger Klackgeräusche ermöglicht, Darüber hinaus soll ein Toleranzausgleich möglich sein.

Diese Aufgabe wird bei einem Gleitstück, insbesondere für Türschließer oder Drehflügelantriebe, mit einem Grundkörper und mit Gleitelementen zur Anlage an gegenüberliegenden Gleitschienenflächen einer Gleitschiene, erfindungsgemäß dadurch gelöst, dass mindestens eines der Gleitelemente am Grundkörper in Richtung auf die Gleitschienenflächen federnd vorgespannt angeordnet ist.

Infolge dieser Ausgestaltung wird mit einfachen Mitteln ein Gleitstück bereitgestellt, das nicht nur Toleranzen ausgleichen kann, sondern das auch die Geräuschentwicklung beim Übergang von der Beschleunigungs- in die Bremsphase reduziert oder vollständig verhindert, da das Gleitstück ein zwischen der Gleitschiene und dem Gleitstück auftretendes Spiel ausgleichen kann. Die Konstruktion hat darüber hinaus den Vorteil, dass das Gleitstück als Energiepuffer dient und somit einem Verschleiß vorbeugt.

Die Unteransprüche haben vorteilhafte Weiterbildungen der Erfindung zum Inhalt.

Gemäß einer ersten Ausführungsform der Erfindung sind an den Grundkörper vier elastische Arme derart angeformt, dass der Grundkörper und die Arme die Form eines X bilden, und dass jeder Arm an seinem freien Ende einen Gleitelement zur Führung an einer Gleitschienenfläche der Gleitschiene trägt. Dies ermöglicht eine einfache und leicht herzustellende Ausgestaltung des Gleitstücks.

Gemäß einer vorteilhaften Weiterbildung ist zwischen jeweils zwei zu unterschiedlichen Gleitschienenflächen der Gleitschiene gerichteten Armen ein elastisches Element angeordnet, welches die elastische Vorspannung der Gleitschuhe in Richtung auf die Gleitschienenflächen erhöht. Dadurch wird eine vollflächige Anlage der Gleitschuhe an die Innenflächen der Gleitschiene sichergestellt.

Das elastische Element füllt vorteilhafterweise den Raum zwischen den zwei Armen zumindest teilweise, vorzugsweise größtenteils, aus.

Alternativ kann das elastische Element auch als bogenförmige Strebe ausgebildet sein.

Besonders einfach lässt sich das erfindungsgemäße Gleitstück herstellen, wenn nach einer vorteilhaften Ausgestaltung das elastische Element an die Arme angespritzt oder anvulkanisiert ist.

Wenn gemäß einer bevorzugten Ausgestaltung die Arme infolge ihrer Eigenelastizität die Gleitschuhe an die Innenflächen der Gleitschiene andrücken, kann auf das elastische Element auch verzichtet werden.

Die in diesem Fall erforderliche Eigenelastizität der Arme kann z. B. dadurch sichergestellt werden, dass jeder Arm aus zwei voneinander beabstandeten und parallel zueinander verlaufenden Stegen gebildet ist.

Zwischen den Stegen kann ein Hohlraum ausgebildet sein, der zur Erhöhung der Steifigkeit auch mit einem elastischen Stoff ausgefüllt sein kann.

Besonders einfach gestaltet sich die Herstellung des erfindungsgemäßen Gleitstücks, wenn nach einer vorteilhaften Ausgestaltung der Grundkörper, die Arme, die Gleitschuhe und ggf. die elastischen Elemente einstückig ausgebildet sind.

Eine zweite Ausführungsform kann sich dadurch auszeichnen, dass an dem Grundkörper auf mindestens einer einer Gleitschienenfläche zugewandten Seite ein elastischer Bügel angeordnet ist, dessen zur Gleitschienenfläche gerichtete Außenseite das Gleitelement bildet.

Vorteilhafterweise ist jedoch an jeder einer Gleitschienenfläche zugewandten Seite des Grundkörpers ein elastischer Bügel angeordnet.

Dabei erstreckt sich jeder Bügel gemäß einer bevorzugten Weiterbildung zumindest über die gesamte Länge des Grundkörpers, er kann - in Bewegungsrichtung des Gleitstücks gesehen - jedoch auch vorne und hinten über das Gleitstück überstehen.

Besonders vorteilhaft ist es, wenn der Bügel - in Bewegungsrichtung des Gleitstücks gesehen - am vorderen und am hinteren Ende des Grundkörpers in diesen übergeht.

Vorteilhafterweise ist der Grundkörper als im Wesentlichen quaderförmiger Block ausgebildet.

Zwischen jedem Bügel und dem Grundkörper ist vorteilhafterweise ein Hohlraum ausgebildet, der zur Erhöhung der Steifigkeit auch mit einem elastischen Element ausgefüllt sein kann.

Besonders einfach und leicht lässt sich das erfindungsgemäße Gleitstück herstellen, wenn Grundkörper, Bügel und ggf. elastisches Element einstückig ausgebildet sind.

Gemäß einer weiteren Ausführungsform kann des erfindungsgemäße Gleitstück auch so aufgebaut sein, dass zwischen dem Grundkörper und den Gleitelementen je ein elastisches Element angeordnet ist, das aus einer Mehrzahl von einzelnen, mit Abstand zueinander angeordneten Stützen besteht.

Bei dieser Ausführungsform ist es vorteilhaft, wenn der Grundkörper aus einem im Wesentlichen quaderförmigen Block und die Gleitelemente aus stabförmigen Leisten bestehen, welche sich über die gesamte Länge des Grundkörpers erstrecken, so dass das gesamte Gleitstück einen quaderförmigen Block bildet.

Gemäß einer weiteren Ausführungsform des erfindungsgemäßen Gleitstücks sind an den Grundkörper zwei Seitenwände derart angeformt sind, dass der Grundkörper und die Seitenwände einen im Wesentlichen U-förmigen Querschnitt bilden, und dass die Außenseite jeder Seitenwand ein Gleitelement zur Führung an einer Gleitschienenfläche der Gleitschiene bildet. Ein derartiges Gleitstück lässt sich relativ einfach durch Ablängen von einem Strangpressprofil herstellen.

Damit die Seitenwände, deren Außenseiten die Gleitelemente bilden, mit Vorspannung in der Gleitschiene geführt sind, sind gemäß einer bevorzugten Weiterbildung die Seitenwände elastisch nach außen vorgespannt und liegen nach dem Einsetzen in die Gleitschiene mit Vorspannung an den Gleitschienenfläche der Gleitschiene an. Hierdurch wird das Entstehen von Geräuschen verhindert oder zumindest reduziert.

Um die Vorspannung weiter zu erhöhen, kann der Zwischenraum zwischen den Seitenwänden zumindest teilweise oder auch vollständig mit einem elastischen Element gefüllt sein.

Um das erfindungsgemäße Gleitstück besonders gut gegen Abnutzung zu schützen, bestehen vorteilhafterweise zumindest der Grundkörper und die Gleitelemente aus verschleißfestem Kunststoff.

Das elastische Element kann vorteilhafterweise aus Gummi, einem zelligen Polyurethan-Elastomer, wie Zellvulkolan, o. dgl. bestehen.

Um eine sichere Verbindung des erfindungsgemäßen Gleitstücks mit einer Tür o, dgl. zu gewährleisten, ist gemäß einer bevorzugten Ausgestaltung in den Grundkörper eine Innengewindebuchse eingesetzt. Diese kann auch bei der Herstellung des Gleitstücks mit eingeformt werden.

Weitere Einzelheiten, Merkmale und Vorteile der Erfindung ergeben sich aus nachfolgender Beschreibung von mehreren bevorzugten Ausführungsbeispielen anhand der Zeichnungen. Es zeigen:
- Figur 1: einen Schnitt durch die Gleitschiene und eine Draufsicht auf das erfindungsgemäße Gleitstück gemäß einer ersten Ausführungsform,
- Figur 2: einen Schnitt durch die Gleitschiene und eine Draufsicht auf das erfindungsgemäße Gleitstück gemäß einer zweiten Ausführungsform,
- Figur 3: eine Draufsicht auf das erfindungsgemäße Gleitstück gemäß einer dritten Ausführungsform,
- Figur 3a: einen Schnitt durch das erfindungsgemäße Gleitstück gemäß der dritten Ausführungsform,
- Figur 4: eine Draufsicht auf das erfindungsgemäße Gleitstück gemäß einer vierten Ausführungsform,
- Figur 5: eine Draufsicht auf das erfindungsgemäße Gleitstück gemäß einer fünften Ausführungsform,
- Figur 6: eine Draufsicht auf das erfindungsgemäße Gleitstück gemäß einer sechsten Ausführungsform,
- Figur 7: das erfindungsgemäße Gleitstück gemäß einer siebten Ausführungsform in einer perspektivischen Ansicht,
- Figur 8: ein Schnitt durch das Gleitstück gemäß Figur 8, und
- Figur 9: ein Schnitt durch das in die Gleitschiene eingesetzte Gleitstück gemäß Figur 8.

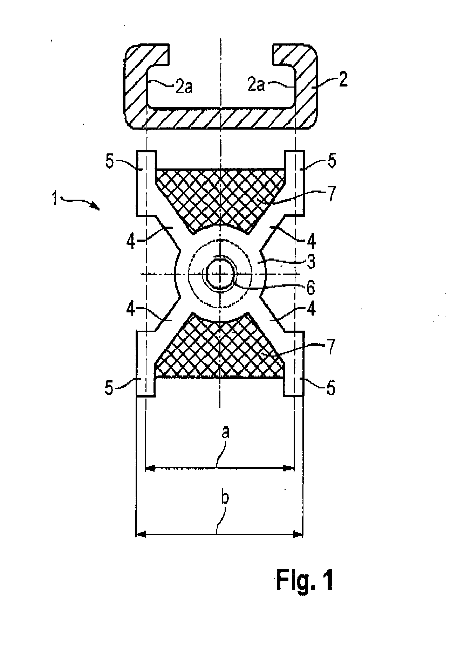

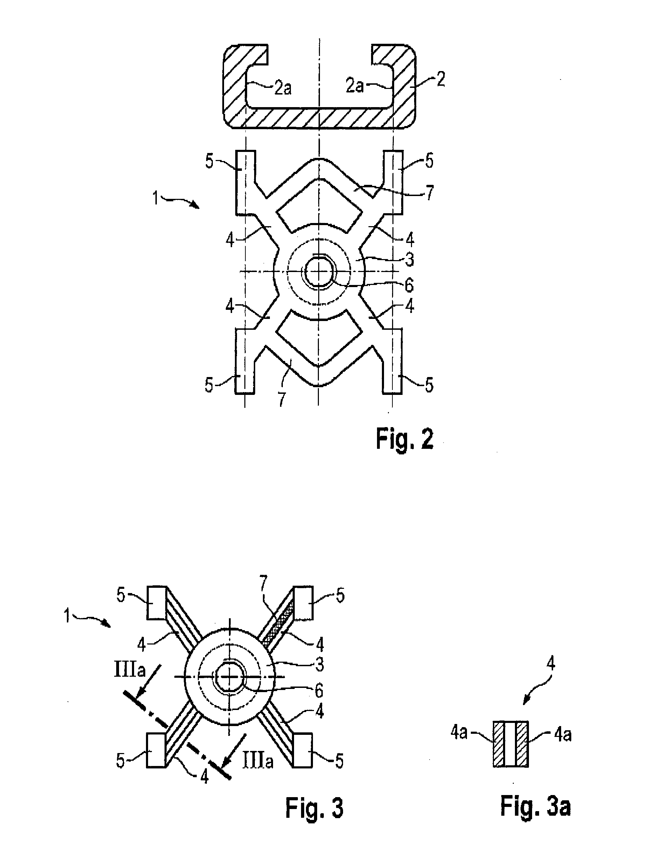

In den Figur 1 und 2 ist eine erste Ausführungsform des erfindungsgemäßen Gleitstück 1 in einer Draufsicht dargestellt, Das Gleitstück 1 ist in einer im wesentlichen C-förmigen Gleitschiene 2 geführt, welche im oberen Bereich der Figur 1 bzw. 2 im Schnitt dargestellt ist.

Das Gleitstück 1 besteht aus einem im wesentlichen rohrförmigen Grundkörper 3, an den etwa radial vier elastische Arme 4 derart angeformt sind, dass Grundkörper 3 und Arme 4 in der Draufsicht die Form eines "X" bilden.

An den von dem Grundkörper 3 wegweisenden Enden der Arme 4 ist jeweils ein Gleitelement 5 ausgebildet, das an gegenüberliegenden Gleitschienenflächen 2a der Gleitschiene 2 anliegt.

In der geometrischen Mitte des Grundkörpers 3 ist eine Innengewindebuchse 6 eingesetzt, über die ein nicht gezeigter Gleitschienenhebel mit dem Gleitstück 1 verbunden werden kann. Die Innengewindebuchse 6 kann zur Verbesserung der Geräuschdämpfung auch noch mit einer nicht dargestellten Dämpfungsbuchse versehen sein.

Das Gleitstück 1 hat eine etwas größere Breite b als der lichte Abstand a zwischen einander gegenüberliegenden Gleitschienenflächen 2a der Gleitschiene 2, so dass die Gleitelemente 5 mit Vorspannung an den Gleitschienenflächen 2a der Gleitschiene 2 anliegen.

Gemäß den Ausführungsbeispielen nach den Figuren 1 bis 3 kann diese Vorspannung auf unterschiedliche Weise bereit gestellt werden.

Bei den in den Figuren 1 und 2 gezeigten Ausführungsformen der erfindungsgemäßen Gleitschiene 1 ist zwischen jeweils zwei zu unterschiedlichen Gleitschienenflächen 2a der Gleitschiene 2 gerichteten Armen 4 ein elastisches Element 7 angeordnet ist, welches zusätzlich zu den Armen 4 die Gleitelemente 5 an die Gleitschienenflächen 2a der Gleitschiene 2 andrückt.

Dieses elastische Element 7 kann entsprechend einer ersten in Figur 1 gezeigten Ausführungsform als Kissen ausgebildet sein, das zwischen jeweils zwei zu unterschiedlichen Gleitschienenflächen 2a der Gleitschiene 2 gerichteten Armen 4 angeordnet ist, um die Gleitelemente 5 in Richtung auf die Gleitschienenflächen 2a der Gleitschiene 2 vorzuspannen. Dieses Kissen kann den Raum zwischen den zwei Armen 4 zumindest teilweise, vorzugsweise größtenteils, ausfüllen, wie in Figur 1 gezeigt ist.

Das Kissen kann - wie im Übrigen auch bei allen anderen Ausführungsbeispielen - z. B. aus Gummi, aus einem zelligen Polyurethan-Elastomer, wie Zellvulkolan, o. dgl. bestehen und an die Arme 4 angespritzt oder anvulkanisiert sein.

Gemäß einer zweiten in Figur 2 gezeigten Ausführungsform kann das elastische Element 7 auch als bogenförmige Strebe ausgebildet sein, welche die beiden zu unterschiedlichen Gleitschienenflächen 2a der Gleitschiene 2 gerichteten Arme 4 verbindet und in Richtung der Gleitschienenflächen 2a vorspannt, so dass die Gleitelemente 5 in Kontakt mit der Gleitschiene 2 gehalten werden.

Auch in diesem Fall kann die Strebe an die Arme 4 angespritzt oder anvulkanisiert sein.

Gemäß einer dritten in Figur 3 gezeigten Ausführungsform können die Arme 4 auch eine derartige Eigenelastizität aufweisen, dass die Gleitelemente 5 infolge dieser Eigenelastizität in Anlage an den Gleitschienenflächen 2a der Gleitschiene 2 gehalten werden. Dazu ist jeder Arm 4 aus zwei voneinander beabstandeten und parallel zueinander verlaufenden Stegen 4a gebildet, wie aus Figur 3a zu erkennen ist. Der Hohlraum zwischen den Stegen 4a kann frei bleiben, wie in Figur 3a zu sehen ist, oder auch mit dem elastischen Element 7 ausgefüllt sein, wie der obere rechte Arm des Gleitstücks 1 in Figur 3 zeigt.

Das gesamte Gleitstück 1 mit Grundkörper 3, Armen 4, Gleitelementen 5 und ggf. elastischen Elementen 7 kann einstückig, z. B. mittels Spritzgießen aus Kunststoff, hergestellt werden.

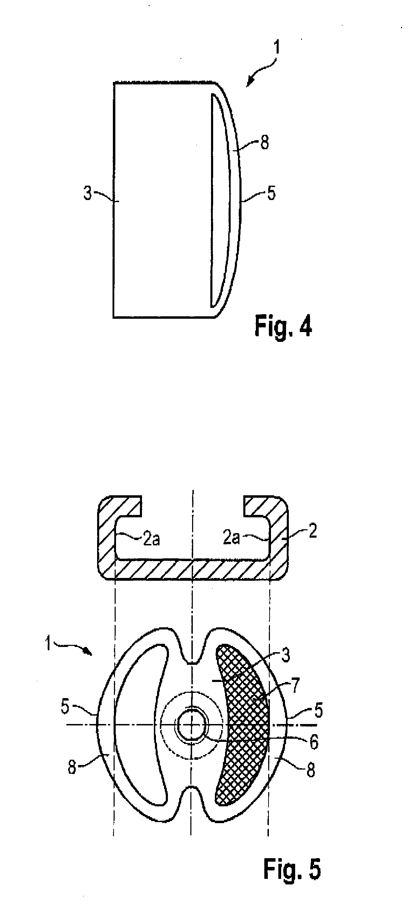

Gemäß einer weiteren in Figur 4 dargestellten Ausführungsform des erfindungsgemäßen Gleitstücks 1 ist an dem Grundkörper 3, der hier als im Wesentlichen quaderförmiger Block ausgebildet ist, auf mindestens einer einer Gleitschienenfläche 2a zugewandten Seite ein elastischer Bügel 8 angeordnet, dessen zur Gleitschienenfläche 2a gerichtete Außenseite das Gleitelement 5 bildet. Dabei erstreckt sich der Bügel 8 über die gesamte Länge des Grundkörpers 3 und geht - in Bewegungsrichtung des Gleitstücks 1 gesehen - am vorderen und am hinteren Ende des Grundkörpers 3 in diesen über. Der zwischen dem Bügel 8 und dem Grundkörper 3 gebildete Hohlraum kann frei bleiben oder mit einem elastischen Element 7 ausgefüllt sein.

Bei dieser Ausführungsform liegt der Grundkörper 3 mit seiner dem Bügel 8 gegenüberliegende Seite an der einen Gleitschienenfläche 2a an, während der Bügel 8 bzw. dessen das Gleitelement 5 bildende Außenseite an der anderen Gleitschienenfläche 2a der Gleitschiene 2 anliegt.

Eine weitere Ausführungsform des erfindungsgemäßen Gleitstücks 1 zeigt Figur 5.

Bei dieser Ausführungsform ist an jeder einer Gleitschienenfläche 2a zugewandten Seiten des Grundkörpers 3 ein elastischer Bügel 8 angeordnet. Dadurch entsteht ein Gleitstück 1, bei dem an dem Grundkörper 3 zwei "Ohren" ausgebildet sind, deren das Gleitelement 5 bildende Außenseiten an den Gleitschienenflächen 2a der Gleitschiene 2 zur Anlage gelangen.

Bei diesem Gleitstück 1 gehen die Bügel 8 - in Bewegungsrichtung des Gleitstücks 1 gesehen - ebenfalls am vorderen und am hinteren Ende des Grundkörpers 3 in diesen über, sie erstrecken sich jedoch nicht nur - wie bei der Ausführungsform nach Figur 4 - über die gesamte Länge des Grundkörpers 3, sondern stehen vorne und hinten über diesen über.

Auch bei dieser Ausführungsform ist zwischen jedem Bügel 8 und dem Grundkörper 3 ein Hohlraum ausgebildet, der frei bleiben (linke Seite in Figur 5) oder mit einem elastischen Element 7 (rechte Seite in Figur 5) ausgefüllt sein kann.

Das gesamte Gleitstück 1 gemäß den Figuren 4 und 5 mit Grundkörper 3, Bügeln 4 und ggf. elastischen Elementen 7 kann einstückig, z. B. mittels Spritzgießen aus Kunststoff, hergestellt werden.

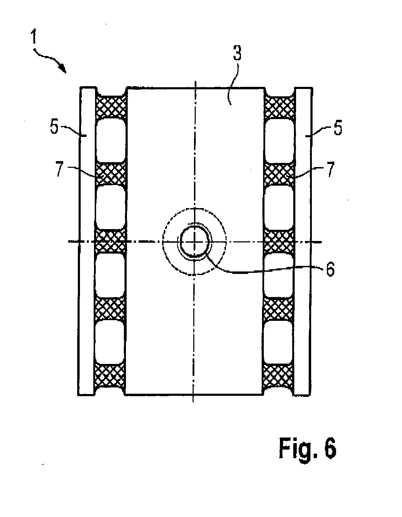

Eine weitere Ausführungsform des erfindungsgemäßen Gleitstücks 1 ist in Figur 6 gezeigt. Gemäß dieser Ausführungsform ist zwischen dem Grundkörper 3 und den Gleitelementen 5 je ein elastisches Element 7 angeordnet, das aus einer Mehrzahl von einzelnen, mit Abstand zueinander angeordneten Stützen besteht. Dabei ist der Grundkörper 3 aus einem im Wesentlichen quaderförmigen Block gebildet, und die Gleitelemente 5 bestehen aus stabförmigen Leisten, welche sich über die gesamte Länge des Grundkörpers 3 erstrecken. Infolge dieser Ausgestaltung ergibt sich ein insgesamt als quaderförmiger Block ausgebildetes Gleitstück 1.

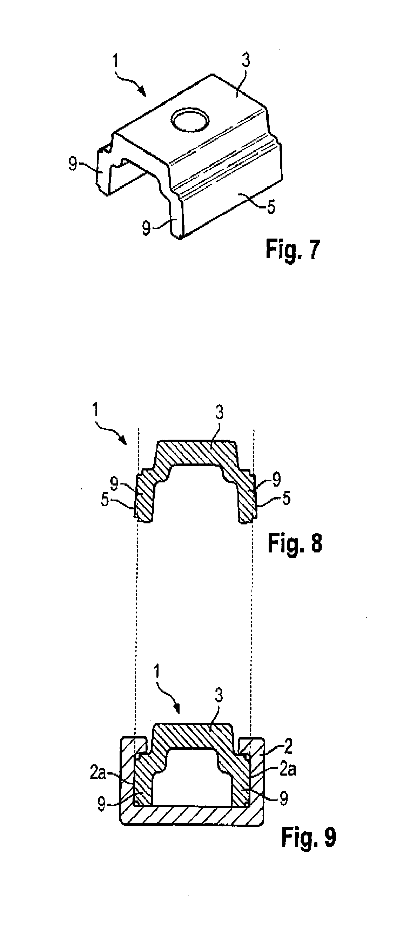

Die Figuren 7 bis 9 zeigen eine weitere Ausführungsform des erfindungsgemäßen Gleitstücks 1. Die Figuren 7 und 8 zeigen das Gleitstück 1 in einer perspektivischen Ansicht und im Schnitt, während die Figur 9 eine Schnitt durch das in die Gleitschiene 2 eingesetzte Gleitstück 1 zeigt,

Gemäß dieser Ausführungsform besteht das Gleitstück 1 aus einem im Wesentlichen rechteckigen Grundkörper 3, an welchen auf dessen Längsseiten Seitenwände 9 - vorteilhafterweise einstückig - angeformt sind. Das Gleitstück 1 ist somit im Querschnitt im Wesentlichen U-förmig ausgestaltet, wie sich insbes. aus den Figuren 7 und 8 ergibt. Die Außenseiten der Seitenwände 9 bilden dabei jeweils ein Gleitelement 5, welches zur Führung an der Gleitschienenfläche 2a der Gleitschiene 2 anliegt.

Die Seitenwände 9 sind leicht nach außen gespreizt (vgl. Figur 8). Infolge dieser Ausgestaltung müssen die Seitenwände 9 leicht nach innen gedrückt werden, wenn das Gleitstück 1 in die Gleitschiene 2 eingesetzt werden soll, so dass die Gleitelemente 5 mit Vorspannung an den Gleitschienenflächen 2a anliegen (vgl. Figur 9). Zur Erhöhung des Anpressdrucks kann der Zwischenraum zwischen den Seitenwänden 9 ganz oder teilweise mit einem elastischen Element ausgefüllt sein (nicht dargestellt).

Bei allen Ausführungsformen bestehen zumindest Grundkörper 3 und Gleitelemente 5 aus verschleißfestem Kunststoff und das elastische Element 7 aus Gummi, einem zelligen Polyurethan-Elastomer o. dgl. Weiterhin ist bei allen Ausführungsformen in den Grundkörper 1 eine Innengewindebuchse 6 eingesetzt, welche zum Anschluss eines nicht dargestellten Türschließers dient.

Bei dem erfindungsgemäßen Gleitstück 1 wird das Auftreten von Klackgeräuschen dadurch verhindert, dass durch die federnde Vorspannung ein steter Kontakt der Gleitelemente 5 auch während der Beschleunigungs- und Bremsphase mit den Gleitschienenflächen 2a der Gleitschiene 2 gewährleistet ist.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

**Bezugszeichenliste**

| | |
|---|---|
| 1 | Gleitstück |
| 2 | Gleitschiene |
| 2a | Gleitschienenfläche |
| 3 | Grundkörper |
| 4 | Arm |
| 4a | Steg |
| 5 | Gleitelement |
| 6 | Innengewindebuchse |
| 7 | elastisches Element |
| 8 | Bügel |
| 9 | Seitenwand |

## Patentansprüche

1. Gleitstück, insbesondere für Türschließer oder Drehflügelantriebe, mit einem Grundkörper und mit Gleitelementen zur Anlage an gegenüberliegenden Gleitschienenflächen einer Gleitschiene, **dadurch gekennzeichnet, dass** mindestens eines der Gleitelemente (5) am Grundkörper (3) in Richtung auf die Gleitschienenflächen (2a) federnd vorgespannt angeordnet ist.

2. Gleitstück nach Anspruch 1, **dadurch gekennzeichnet, dass** an den Grundkörper (3) vier elastische Arme (4) derart angeformt sind, dass der Grundkörper (3) und die Arme (4) die Form eines X bilden, und dass jeder Arm (4) an seinem freien Ende ein Gleitelement (5) zur Führung an einer Gleitschienenfläche (2a) der Gleitschiene (2) trägt.

3. Gleitstück nach Anspruch 2, **dadurch gekennzeichnet, dass** zwischen jeweils zwei zu unterschiedlichen Gleitschienenflächen (2a) der Gleitschiene (2) gerichteten Armen (4) ein elastisches Element (7) angeordnet ist, welches die elastische Vorspannung der Gleitschuhe (5) in Richtung auf die Gleitschlenenflächen (2a) erhöht.

4. Gleitstück nach Anspruch 3, **dadurch gekennzeichnet, dass** das elastische Element (7) den Raum zwischen den zwei Armen (4) zumindest teilweise, vorzugsweise größtenteils, ausfüllt.

5. Gleitstück nach Anspruch 3, **dadurch gekennzeichnet, dass** das elastische Element (7) als bogenförmige Strebe ausgebildet ist.

6. Gleitstück nach einem der Ansprüche 3 bis 5, **dadurch gekennzeichnet, dass** das elastische Element (7) an die Arme (4) angespritzt oder anvulkanisiert ist.

7. Gleitstück nach Anspruch 2, **dadurch gekennzeichnet, dass** die Arme (4) infolge ihrer Eigenelastizität die Gleitschuhe (5) an die Gleitschienenflächen (2a) der Gleitschiene (2) andrücken.

8. Gleitstück nach Anspruch 7, **dadurch gekennzeichnet, dass** jeder Arm (4) aus zwei voneinander beabstandeten und parallel zueinander verlaufenden Stegen (4a) gebildet ist.

9. Gleitstück nach Anspruch 8, **dadurch gekennzeichnet, dass** zwischen den Stegen (4a) ein Hohlraum ausgebildet ist.

10. Gleitstück nach Anspruch 9, **dadurch gekennzeichnet, dass** der Hohlraum mit dem elastischen Element (7) ausgefüllt ist.

11. Gleitstück nach einem der Ansprüche 2 bis 10, **dadurch gekennzeichnet, dass** der Grundkörper (3), die Arme (4), die Gleitschuhe (5) und ggf. die elastischen Elemente (7) einstückig ausgebildet sind.

12. Gleitstück nach Anspruch 1, **dadurch gekennzeichnet, dass** an dem Grundkörper (3) auf mindestens einer einer Gleitschienenfläche (2a) zugewandten Seite ein elastischer Bügel (8) angeordnet ist, dessen zur Gleitschienenfläche (2a) gerichtete Außenseite das Gleitelement (5) bildet,

13. Gleitstück nach Anspruch 12, **dadurch gekennzeichnet, dass** an jeder einer Gleitschienenfläche (2a) zugewandten Seite des Grundkörpers (3) ein elastischer Bügel (8) angeordnet ist.

14. Gleitstück nach einem der Ansprüche 12 oder 13, **dadurch gekennzeichnet, dass** sich jeder Bügel (8) zumindest über die gesamte Länge des Grundkörpers (3) erstreckt.

15. Gleitstück nach einem der Ansprüche 12 bis 14, **dadurch gekennzeichnet, dass** der Bügel (8) - in Bewegungsrichtung des Gleitstücks (1) gesehen - am vorderen und am hinteren Ende des Grundkörpers (3) in diesen übergeht.

16. Gleitstück nach einem der Ansprüche 12 bis 15, **dadurch gekennzeichnet, dass** der Grundkörper (3) als im Wesentlichen quaderförmiger Block ausgebildet ist.

17. Gleitstück nach einem der Ansprüche 12 bis 16, **dadurch gekennzeichnet, dass** zwischen jedem Bügel (8) und dem Grundkörper (3) ein Hohlraum ausgebildet ist.

18. Gleitstück nach Anspruch 17, **dadurch gekennzeichnet, dass** der Hohlraum mit einem elastischen Element (7) ausgefüllt ist.

19. Gleitstück nach einem der Ansprüche 12 bis 18, **dadurch gekennzeichnet, dass** Grundkörper (3), Bügel (8) und ggf. elastische Elemente (7) einstückig ausgebildet sind.

20. Gleitstück nach Anspruch 1, **dadurch gekennzeichnet, dass** zwischen dem Grundkörper (3) und den Gleitelementen (5) je ein elastisches Element (7) angeordnet ist, das aus einer Mehrzahl von einzelnen, mit Abstand zueinander angeordneten Stützen besteht.

21. Gleitstück nach Anspruch 20, **dadurch gekennzeichnet, dass** der Grundkörper (3) aus einem im Wesentlichen quaderförmigen Block und die Gleitelemente (5) aus stabförmigen Leisten bestehen, welche sich über die gesamte Länge des Grundkörpers (3) erstrecken.

22. Gleitstück nach Anspruch 1, **dadurch gekennzeichnet, dass** an den Grundkörper (3) zwei Seitenwände (9) derart angeformt sind, dass der Grundkörper (3) und die Seitenwände (9) einen im Wesentlichen U-förmigen Querschnitt bilden, und dass die Außenseite jeder Seitenwand (9) ein Gleitelement (5) zur Führung an einer Gleitschienenfläche (2a) der Gleitschiene (2) bildet.

23. Gleitstück nach Anspruch 22, **dadurch gekennzeichnet, dass** die Seitenwände (9) elastisch nach außen vorgespannt sind und nach dem Einsetzen in die Gleitschiene (2) mit Vorspannung an den Gleitschienenfläche (2a) der Gleitschiene (2) anliegen.

24. Gleitstück nach Anspruch 22 oder 23, **dadurch gekennzeichnet, dass** der Zwischenraum zwischen den Seitenwänden (9) zumindest teilweise mit einem elastischen Element gefüllt ist.

25. Gleitstück nach einem der Ansprüche 1 bis 24, **dadurch gekennzeichnet, dass** der zumindest Grundkörper (3) und die Gleitelemente (5) aus verschleißfestem Kunststoff bestehen.

26. Gleitstück nach einem der Ansprüche 1 bis 25, **dadurch gekennzeichnet, dass** das elastische Element (7) aus Gummi, einem zelligen Polyurethan-Elastomer o. dgl. besteht.

27. Gleitstück nach einem der Ansprüche 1 bis 26, **dadurch gekennzeichnet, dass** in den Grundkörper (1) eine Innengewindebuchse (6) eingesetzt ist.
